# EUROPEAN PATENT APPLICATION

(11) **EP 1 119 161 A2**
(43) Date of publication of application: **25.07.2001**
(21) Application number: 01101080.8
(22) Date of filing: 18.01.2001
(51) Int. Cl.: H04M 1/60, H04M 1/725

(54) **Wireless hands-free system of cellular phone**

(30) Priority: 20.01.2000 KR 2000002703
(71) Applicant: LFIN Co., Ltd., Puchon-shi, Kyonggi-do, 420-130 (KR)
(72) Inventor: Son, Hyo-Suk, Kyungsangnam-do, 641-170 (KR); Lee, Jin-II, Kaeyang-gu, Incheon-shi 407-040 (KR)
(74) Representative: Grünecker, Kinkeldey, Stockmair & Schwanhäusser Anwaltssozietät

(57) **Abstract**

The present invention relates to a wireless hands-free system of cellular phone, more particularly to a wireless hands-free system of cellular phone, capable of being connected to any cellular phone easily, being used qualitatively without directly handling the body of a cellular phone, and lengthening the life span of its battery by reducing power consumption greatly due to a design of low power operated according to a transmitting-receiving condition.

The system includes: a phone body with an earphone/microphone terminal; a main-device operated by a battery incorporated in itself, connected to said earphone/microphone terminal of said phone body, and adapted to input/output sound signals, and receive/transmit the sound signals thus input/output by wireless; and sub-device operated by a battery incorporated in itself, connected to said main-device by wireless, and adapted to receive/transmit sound signals, and input/output the sound signals thus received/transmitted to/from an earphone/microphone through users.

## Description

### FIELD OF THE INVENTION

The present invention relates to a wireless hands-free system of cellular phone, more particularly to a wireless hands-free system of cellular phone, capable of being connected to any cellular phone easily, being used qualitatively without directly handling the body of a cellular phone, and lengthening the life span of its battery by reducing power consumption greatly due to a design of low power operated according to a transmitting-receiving condition.

### BACKGROUND OF THE INVENTION

Generally, as a cellular phone has problems such as its body must be operated directly while calling, causing inconvenience to users, concentration on safety driving is liable to be reduced while driving, and users are likely to be exposed to detrimental electromagnetic radiations because users should use the phone in touch with the phone body, various types of wire or wireless hands-free systems which separated the phone body from the transmitter-receiver section have been developed recently.

Of those, wire hands-free systems have advantages of its simple construction and easy fabrication, but have problems such as the wires get tangled or a constant distance must be maintained.

Meanwhile, when already-known wireless hands-free systems are examined to solve above mentioned problems of wire hands-free systems, firstly, there is a type that has a hands-free system incorporated into the body of a cellular phone, but this too has a problem such as the existing cellular phone needs to be exchanged entirely for a new one, resulting in not a little expenses.

Secondly, there is another type of exterior mounting with specific connectors for own-made cellular phones, but this is usable only for the special products adapted to the specific connectors, causing lacks of free mounting and of compatibility.

In addition, the prior art wireless hands-free system has problems of shortening the life span of its battery as the system uses the battery of the phone body itself, as well as of having no power-saving function.

### SUMMARY OF THE INVENTION

Accordingly, the present invention is attained to solve above mentioned problems, and an object is to provide a wireless hands-free system of cellular phone, capable of being connected to any cellular phone easily, being used qualitatively over the phone without directly handling the phone body, and lengthening the life span of its battery by reducing power consumption greatly due to a design of low power operated according to a transmitting-receiving condition.

A feature of the present invention to achieve above object is that the system includes: a phone body with an earphone/microphone terminal; a main-device operated by a battery incorporated in itself, connected to said earphone/microphone terminal of said phone body, and adapted to input/output sound signals, and receive/transmit the sound signals thus input/output by wireless; and sub-device operated by a battery incorporated in itself, connected to said main-device by wireless, and adapted to receive/transmit sound signals, and input/output the sound signals thus received/transmitted to/from an earphone/microphone through users.

The main-device of the present invention includes: a body-connecting earphone/microphone jack connected to said earphone/microphone terminal and adapted to input/output sound signals; a filtering mean for filtering the input/output signals; an antenna matching mean for receiving/transmitting thus filtered signals by wireless; a VCO & transmit outputting mean for adjusting the transmitting output by controlling voltage; a communication controlling mean for adjusting the transmitting output by sending the sound signals thus input from said body-connecting earphone/microphone jack to said antenna matching mean via said filtering mean, and controlling said VCO & transmit outputting mean; and a CPU for controlling overall operating conditions of said main-device linked with said communication controlling mean by input of a switch operated by the user.

Said main-device further includes a receiving condition sensing mean for sensing a presence of wireless signals received in the antenna of a phone body.

Said main-device further includes a power supplying mean having a power-saving function, for adjusting ON/OFF of the battery power by checking the sensed condition of receiving signals from said receiving condition sensing mean, or the call signal from said sub-device periodically.

Preferably, said CPU switches the system to on the phone mode or off the phone mode after checking the sensed condition of receiving signals from said receiving condition sensing mean, or the call signal from said sub-device. When in on the phone mode, said CPU senses the frequency condition, and if there is a signal interference, outputs frequency changing signals, checks the remaining life of the battery, and outputs alarm generating signals if the life is less than the specified level.

Said sub-device includes: an earphone/microphone for inputting/outputting the user's sound signals; a filtering mean for filtering the input/output signals; an antenna matching mean for receiving/transmitting thus filtered signals by wireless; a VCO & transmit outputting mean for adjusting the transmitting output by controlling voltage; a communication controlling mean for adjusting the transmitting output by sending the sound signals thus input from said earphone/microphone to said antenna matching mean via said filtering mean, and controlling said VCO & transmit outputting mean; and a CPU for controlling overall operating conditions of said sub-device linked with said communication controlling mean by input of a switch operated by the user.

Said sub-device further includes a power supplying mean having a power-saving function, for adjusting ON/OFF of said battery power by checking the received signals from said main-device, or the call signal of said CPU periodically.

Said sub-device further includes an earphone/microphone terminal for exterior connecting adapted to connect the sound signals input/output to/from said earphone/microphone to exterior.

Preferably, said CPU switches the system to on the phone mode or off the phone mode after checking the received signals from said main-device, or the call signal of said CPU. When in on the phone mode, said CPU senses the frequency condition, and if there is a signal interference, outputs frequency changing signals, checks the remaining life of the battery, and outputs alarm generating signals if the life is less than the specified level.

Furthermore, the feature of the present invention is that the system includes: a main-device operated by a battery incorporated in a housing, built in near the phone body, connected to the earphone/microphone terminal of the phone body, and adapted to input/output sound signals, and receive/transmit the sound signals thus input/output by wireless; and a sub-device having a disc-like body with an ear hanger attached on, operated by said battery incorporated in said body, connected to said main-device by wireless, and adapted to input the received sound signals to an earphone formed in a inserting unit protruded inwardly of said body to be inserted into the ear of the user, and input the sound signals of the user to a microphone formed at a lower part of said body.

### BRIEF DESCRIPTION OF THE DRAWINGS

Fig. 1 is a schematic diagram showing a wireless hands-free system of a cellular phone according to the present invention.

Fig. 2 is a controlling block diagram showing a main-device of a wireless hands-free system of the present invention.

Fig. 3 is a controlling block diagram showing a sub-device of a wireless hands-free system of the present invention.

Fig. 4 is a detailed circuit diagram showing a receiving condition sensing mean of the present invention.

Fig. 5 is a detailed circuit diagram showing a battery power-saving mean of the present invention.

### DETAILED DESCRIPTION OF THE EMBODIMENT

The present invention will be described in more detail with reference to the attached drawings.

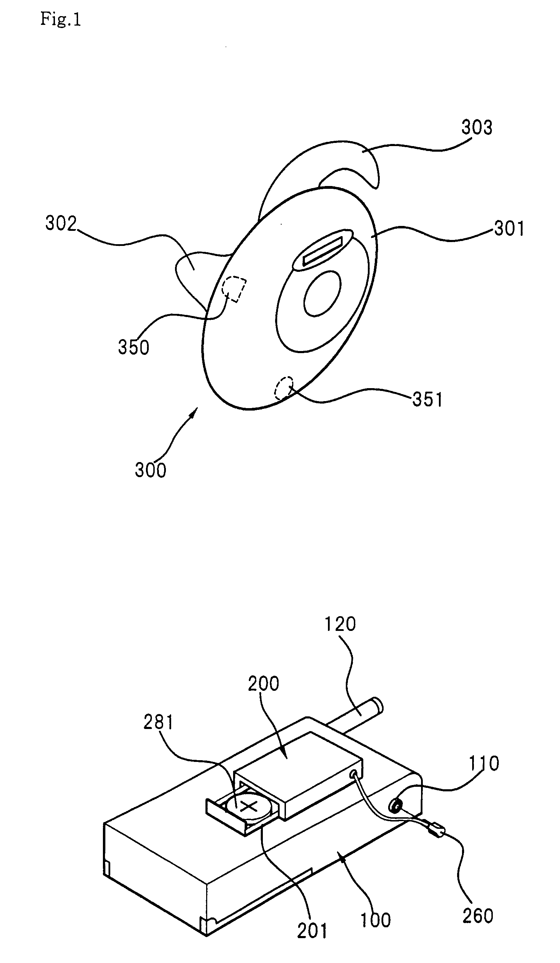

Fig. 1 is a schematic diagram showing a wireless hands-free system of a cellular phone according to the present invention. As shown in Fig. 1, the wireless hands-free system includes: a phone body 100 with an earphone/microphone terminal 110; a main-device 200 operated by a battery 281 incorporated in itself, connected to said earphone/microphone terminal 110 of said phone body 100, and adapted to input/output sound signals, and receive/transmit the sound signals thus input/output by wireless; and sub-device 300 operated by a battery 381 incorporated in itself, connected to said main-device 100 by wireless, and adapted to receive/transmit sound signals, and input/output the sound signals thus received/transmitted to/from an earphone 350/microphone 351 through users.

Said main-device 200 which is operated by a battery incorporated in the housing 201, built in near the phone body 100, and connected to the earphone/microphone terminal 100 of the phone body 110, inputs/outputs sound signals, and receives/transmits the sound signals thus input/output by wireless;

Said sub-device 300 of a disc-like body 301 with an ear hanger 303 attached on which is operated by said battery 381 incorporated in said body 301, and connected to said main-device 200 by wireless, inputs the received sound signals to the earphone 350 formed in a inserting unit 302 protruded inwardly of said body 301 to be inserted into the ear of the user, and input the sound signals of the user to a microphone 351 9formed at a lower part of said body 301.

Accordingly, the system has a micro-miniature, ultra-thin, and extra-light configuration, and can be designed so as to be suitable for existing cellular phones, to accommodate the inserting unit 302 into the ear comfortably, and to wear the ear hanger 303 made of urethane softly and harmlessly to the human body.

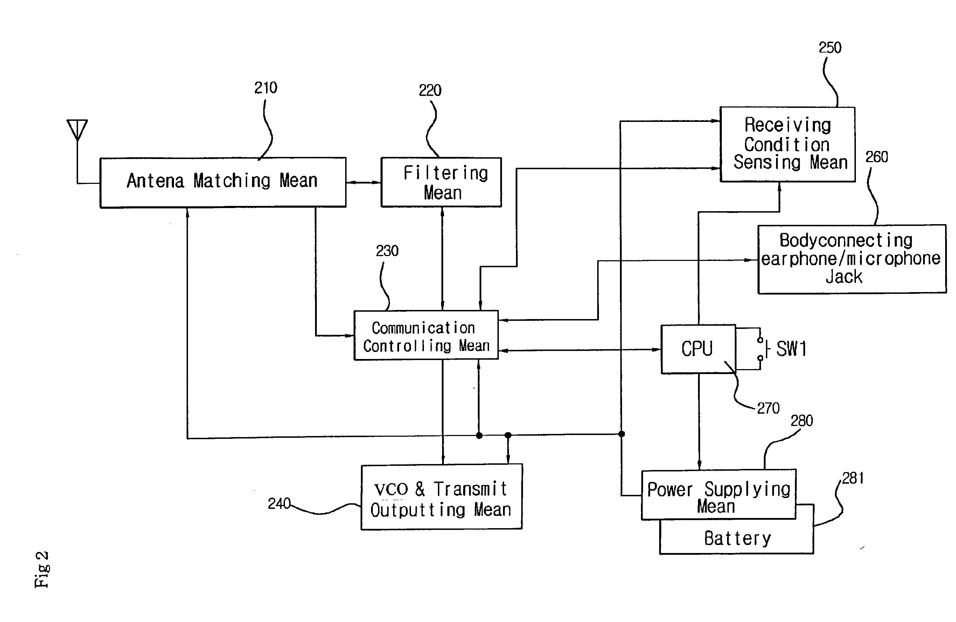

Fig. 2 is a controlling block diagram showing a main-device of a wireless hands-free system of the present invention. As shown in Fig. 2, said main-device 200 includes: a body-connecting earphone/microphone jack 260 connected to said earphone/microphone terminal 110 and adapted to input/output sound signals; a filtering mean 220 for filtering the input/output signals; an antenna matching mean 210 for receiving/transmitting thus filtered signals by wireless; a VCO & transmit outputting mean 240 for adjusting the transmitting output by controlling voltage; a communication controlling mean 230 for adjusting the transmitting output by sending the sound signals thus input from said body-connecting earphone/microphone jack 260 to said antenna matching mean 210 via said filtering mean 220, and controlling said VCO & transmit outputting mean 240; and a CPU 270 for controlling overall operating conditions of said main-device 200 linked with said communication controlling mean 230 by input of a switch SW1 operated by the user.

Said main-device 200 further includes a receiving condition sensing mean 250 for sensing a presence of wireless signals received in the antenna 120 of a phone body 100, and a power supplying mean 280 having a power-saving function, for adjusting ON/OFF of the battery power 281 by checking the sensed condition of receiving signals from said receiving condition sensing mean 250, or the call signal from said sub-device 300 periodically.

Preferably, said CPU 270 switches the system to on the phone mode or off the phone mode after checking the sensed condition of receiving signals from said receiving condition sensing mean 250, or the call signal from said sub-device 300. When in on the phone mode, said CPU 270 senses the frequency condition, and if there is a signal interference, outputs frequency changing signals, checks the remaining life of the battery 281, and outputs alarm generating signals if the life is less than the specified level.

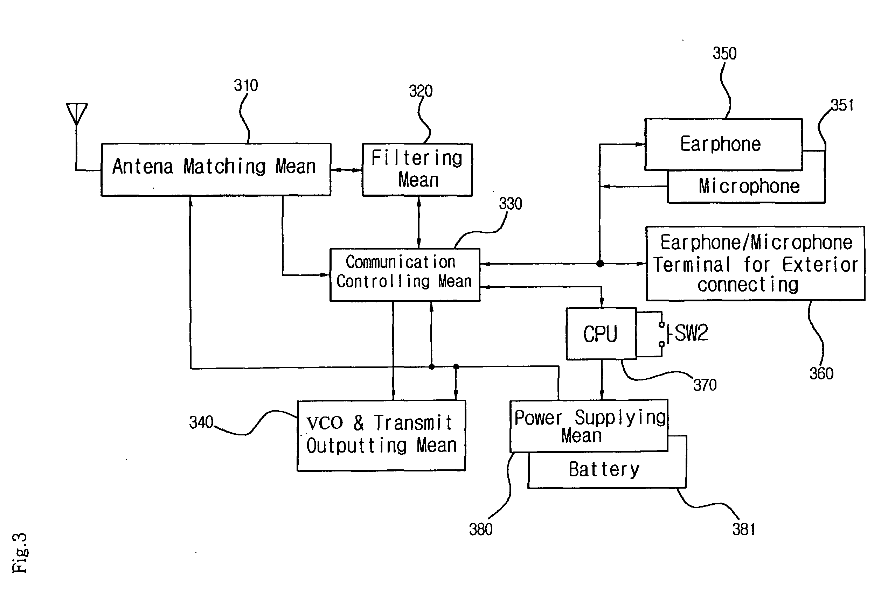

Fig. 3 is a controlling block diagram showing a sub-device of a wireless hands-free system of the present invention. As shown in Fig. 3, said sub-device 300 includes: an earphone 350/microphone 351 for inputting/outputting the user's sound signals; a filtering mean 320 for filtering the input/output signals; an antenna matching mean 310 for receiving/transmitting thus filtered signals by wireless; a VCO & transmit outputting mean 340 for adjusting the transmitting output by controlling voltage; a communication controlling mean 330 for adjusting the transmitting output by sending the sound signals thus input from said earphone 350/microphone 351 to said antenna matching mean 310 via said filtering mean 320, and controlling said VCO & transmit outputting mean 340; and a CPU 370 for controlling overall operating conditions of said sub-device 300 linked with said communication controlling mean 330 by input of a switch SW2 operated by the user.

Said sub-device 300 further includes a power supplying mean 380 having a power-saving function, for adjusting ON/OFF of said battery 381 power by checking the received signals from said main-device 200, or the call signal of said CPU 370 periodically, and an earphone/microphone terminal 360 for exterior connecting adapted to connect the sound signals input/output to/from said earphone 350/microphone 351 to exterior.

Preferably, said CPU 370 switches the system to on the phone mode or off the phone mode after checking the received signals from said main-device 200, or the call signal of said CPU 370. When in on the phone mode, said CPU 370 senses the frequency condition, and if there is a signal interference, outputs frequency changing signals, checks the remaining life of the battery 381, and outputs alarm generating signals if the life is less than the specified level.

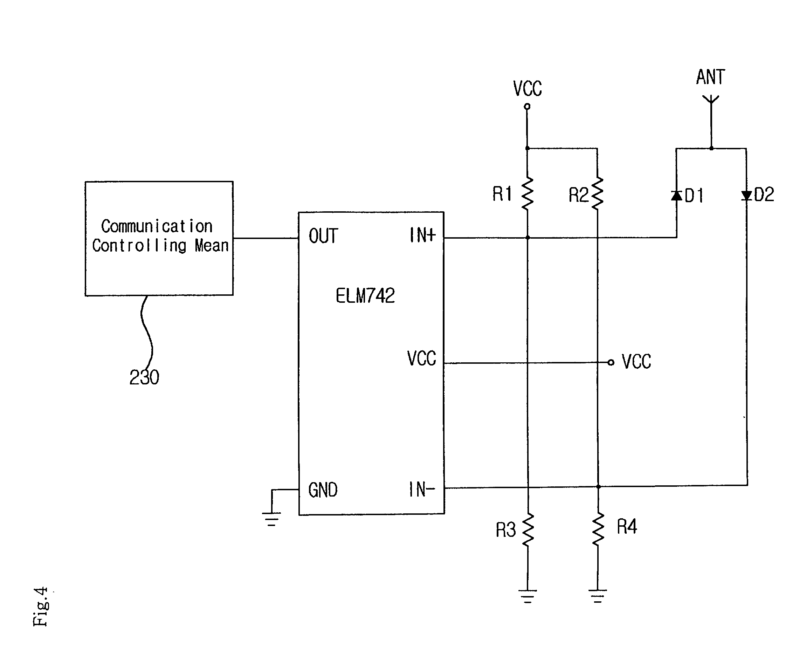

Fig. 4 is a detailed circuit diagram showing a receiving condition sensing mean of the present invention. As shown in Fig. 4, said receiving condition sensing mean of an embodiment comprises an antenna ANT, an IC (ELM742) for sensing input/output conditions, diodes D1, D2, and a plurality of resistance R1-R2.

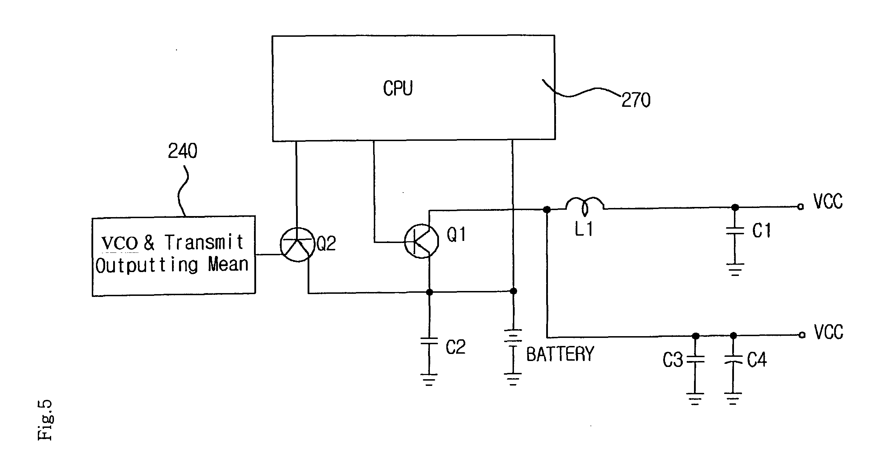

Fig. 5 is a detailed circuit diagram showing a battery power-saving mean of the present invention. As shown in Fig. 5, said power-saving mean of an embodiment comprises transistors Q1, Q2, an inductor L1, and a plurality of condensers C1-C4.

In the system according the present invention, when the phone body 100 receives a call signal from a base station (not shown in Fig.), the receiving condition sensing mean 250 of the main-device 200 senses the high frequency signals sent to the antenna 120, and the battery 280 supplies operating power to each unit.

Meanwhile, received sound signals are input to the main-device 200 via the body-connecting earphone/microphone jack 260, and sent to the sub-device 300 after being modulated via the filtering mean 220, VCO & transmit outputting mean 240, and the antenna matching mean 210 controlled by the communication controlling mean 230 and the CPU 270.

In the sub-device 300, the sound signals are sent to the user in voice through the earphone 350 after being demodulated and amplified via the antenna matching mean 310, the filtering mean 320, the communication controlling mean 330, and the CPU 370,

The voice of the user is converted to electric signals and amplified via the microphone 351 and sent to the main-device 200 via the communication controlling mean 330, the VCO & transmit outputting mean 340, the filtering mean 220, and the antenna matching mean 310.

In the main-device 200, the received signals are demodulated and processed, and the processed signals are sent to the phone body 100 via the earphone/microphone jack 260 and transmitted to the air in high frequency signals.

When the user in a on the phone mode operates the SW2 connected to the CPU 370 of the sub-device 300, the on the phone mode is switched to the off the phone mode by controlling of the CPU 370.

In addition, in the main-device 200, the sensed condition of receiving signals from said receiving condition sensing mean 250, or the call signal from said sub-device 300 is checked periodically, and in case of no receiving signals, the battery power 281 is switched off in order to prevent an unnecessary power consumption.

As described above, the present invention has various effects such as simple structure, easy miniaturizing, a long life span of the battery through power-saving function, the low production cost due to the reduced necessary parts and easy integration, and freedom of mounting and high compatibility of the battery due to the discrete use of the battery.

Further, the present invention makes remote controls easy as various controlling functions exist, using quality excellent as the receiving/transmitting is performed with sound and image signals compressed/released, the user protected not to be exposed to harmful radio waves as the user uses the phone at a distance from it, uses possible by one-touch operation from the off the phone mode, and the user's safety driving possible as the concentration on the driving of the driver is not reduced.

## Claims

1. A wireless hands-free system of a cellular phone, wherein said system includes:
a phone body with an earphone/microphone terminal;
a main-device operated by a battery incorporated in itself, connected to said earphone/microphone terminal of said phone body, and adapted to input/output sound signals, and receive/transmit the sound signals thus input/output by wireless; and
sub-device operated by a battery incorporated in itself, connected to said main-device by wireless, and adapted to receive/transmit sound signals, and input/output the sound signals thus received/transmitted to/from an earphone/microphone through users.

2. A wireless hands-free of a cellular phone according claim 1, said main-device includes:
a body-connecting earphone/microphone jack connected to said earphone/microphone terminal and adapted to input/output sound signals;
a filtering mean for filtering the input/output signals;
an antenna matching mean for receiving/transmitting thus filtered signals by wireless;
a VCO & transmit outputting mean for adjusting the transmitting output by controlling voltage;
a communication controlling mean for adjusting the transmitting output by sending the sound signals thus input from said body-connecting earphone/microphone jack to said antenna matching mean via said filtering mean, and controlling said VCO & transmit outputting mean; and
a CPU for controlling overall operating conditions of said main-device linked with said communication controlling mean by input of a switch operated by the user.

3. A wireless hands-free of a cellular phone according claim 2, said main-device further includes a receiving condition sensing mean for sensing a presence of wireless signals received in the antenna of a phone body.

4. A wireless hands-free of a cellular phone according claim 3, said main-device further includes a power supplying mean having a power-saving function, for adjusting ON/OFF of the battery power by checking the sensed condition of receiving signals from said receiving condition sensing mean, or the call signal from said sub-device periodically.

5. A wireless hands-free of a cellular phone according claim 2, said CPU switches the system to on the phone mode or off the phone mode after checking the sensed condition of receiving signals from said receiving condition sensing mean, or the call signal from said sub-device. When in on the phone mode, said CPU senses the frequency condition, and if there is a signal interference, outputs frequency changing signals, checks the remaining life of the battery, and outputs alarm generating signals if the life is less than the specified level.

6. A wireless hands-free of a cellular phone according claim 1, said sub-device includes:
an earphone/microphone for inputting/outputting the user's sound signals;
a filtering mean for filtering the input/output signals;
an antenna matching mean for receiving/transmitting thus filtered signals by wireless;
a VCO & transmit outputting mean for adjusting the transmitting output by controlling voltage;
a communication controlling mean for adjusting the transmitting output by sending the sound signals thus input from said earphone/microphone to said antenna matching mean via said filtering mean, and controlling said VCO & transmit outputting mean; and
a CPU for controlling overall operating conditions of said sub-device linked with said communication controlling mean by input of a switch operated by the user.

7. A wireless hands-free of a cellular phone according claim 6, said sub-device further includes a power supplying mean having a power-saving function, for adjusting ON/OFF of said battery power by checking the received signals from said main-device, or the call signal of said CPU periodically.

8. A wireless hands-free of a cellular phone according claim 7, said sub-device further includes an earphone/microphone terminal for exterior connecting adapted to connect the sound signals input/output to/from said earphone/microphone to exterior.

9. A wireless hands-free of a cellular phone according claim 6, said CPU switches the system to on the phone mode or off the phone mode after checking the received signals from said main-device, or the call signal of said CPU. When in on the phone mode, said CPU senses the frequency condition, and if there is a signal interference, outputs frequency changing signals, checks the remaining life of the battery, and outputs alarm generating signals if the life is less than the specified level.

10. A wireless hands-free of a cellular phone, wherein the system includes:
a main-device operated by a battery incorporated in a housing, built in near the phone body, connected to the earphone/microphone terminal of the phone body, and adapted to input/output sound signals, and receive/transmit the sound signals thus input/output by wireless; and a sub-device having a disc-like body with an ear hanger attached on, operated by said battery incorporated in said body, connected to said main-device by wireless, and adapted to input the received sound signals to an earphone formed in a inserting unit protruded inwardly of said body to be inserted into the ear of the user, and input the sound signals of the user to a microphone formed at a lower part of said body.
